# EUROPEAN PATENT APPLICATION

(11) **EP 2 985 943 A1**
(43) Date of publication of application: **17.02.2016**
(21) Application number: 13881788.7
(22) Date of filing: 13.09.2013
(51) Int. Cl.: H04L 5/00, H04J 14/02, H04B 10/07

(54) **SPECTRUM RESOURCE ALLOCATION METHOD AND DEVICE BASED ON FLEXIBLE GRID LABEL**

(30) Priority: 07.04.2013 CN 201310117917
(71) Applicant: ZTE Corporation, 518057 Shenzhen City, Guangdong Province (CN)
(72) Inventor: KE, Zhiyong, Shenzhen Guangdong Province 518057 (CN); HUA, Feng, Shenzhen Guangdong Province 518057 (CN)
(74) Representative: Novagraaf Technologies
(86) International application number: PCT/CN2013/083457
(87) International publication number: WO 2014/166205

(57) **Abstract**

Provided are a spectrum resource allocation method and device based on a flexible grid label. The method comprises: acquiring an identifier of a wavelength channel which is used for sending flexible grid label information; classifying, according to the identifier, each subcarrier which is used for bearing the flexible grid label information; in the wavelength channel corresponding to the identifier, determining a frequency range of the wavelength channel according to information about the each subcarriers classified; and allocating spectrum resources for one or more other wavelength channels except for the wavelength channel according to the frequency range, wherein the above-mentioned wavelength channel and the one ore more other wavelength channels are jointly used for sending the flexible grid label information. By adopting the technical solution provided in the present disclosure, the technical problems which have not been effectively solved in the related art are solved, such as the problem that it is hard to determine the channel range caused by the continuity of flexible grid channel subcarrier, thereby implementing the sending of information about a flexible grid label.

## Description

### Technical Field

The present disclosure relates to the field of Communications, and in particular to a spectrum resource allocation method and device based on a flexible grid label.

### Background

Reconfigurable Optical Add Drop Multiplexer (ROADM) enables local add-drop and pass-through of channel wavelength via software configuration to enhance the flexibility of service transport in optical networks. The existing ROADM system is colorless, directionless, and contentionless (CDC). A traditional wavelength division multiplexing system adopts the fixed grid technology, wherein a channel grid is 50 GHz or 100 GHz. The technology of transport over 100 G hastens the requirements of flexible grid (or gridless) to adapt to requirements of wavelength division multiplexing transport with different modulation code patterns and different rates. The flexible grid technology is preliminarily standardized first in February 2011 according to the standard G.694.1 of the search group 15 of the International Telecommunications Union (ITU-T SG15), whose internal release of draft standard files is V1.2, wherein a standard nominal central frequency is 193.1 THz + n x 0.00625 THz, where n is an integer, and a standard bandwidth is 12.5 GHz x m, where m is a positive integer. In this patent, a ROADM system provided with the flexible grid technology is referred to as Flex ROADM.

Flexible grid wavelength label technology is used to implement wavelength division multiplexing networks; in particular, the wavelength tracing function of a pure optical layer in an optical add-drop multiplexing system with a dynamically reconfigurable wavelength may distinguish and identify wavelengths from different addresses in the system. The flexible grid wavelength label technology implements functions of monitoring and auto discovery for the wavelength path, and so on by adding a wavelength label signal, subcarrier information, etc. for each wavelength signal at a source end of a wavelength path of a wavelength division multiplexing optical switching system, and detecting and identifying the label of each wavelength passing the point in each point which the wavelength path passes.

A flexible grid wavelength label may be implemented by a method of adding a pilot tone signal on a wavelength signal, and the method may bind a flexible grid wavelength label with the corresponding wavelength signal, which less influences the quality of the original signal. The flexible grid wavelength label technology relates to the pilot tone technology, which is described as follows: in a wavelength division multiplexing system, a pilot tone signal is loaded for each wavelength to implement multiple special applications, which has been studied before in the industry. The pilot tone signal is sometimes also called as low-frequency dither signal, and loading a pilot tone signal on a wavelength signal has a negligible influence on the transmission performance.

However, in the related art, it only considers the service transport at fixed frequency intervals, and not consider the carrying of flexible grid information in the case of service rate over 100 Gb/s; it also does not further consider the problem of the continuity of flexible grid channel subcarrier.

Aiming at the above-mentioned problems in the related art, no effective solution has been proposed at present.

### Summary

Aiming at the technical problems that cannot yet be effectively solved in the art, e.g., the difficulty in determining a channel range due to the continuity of flexible grid channel subcarriers, the embodiments of the present disclosure provide a spectrum resource allocation method and device based on a flexible grid label, so as to solve at least one of the above-mentioned problems.

According to an embodiment of the present disclosure, provided is a spectrum resource allocation method based on a flexible grid label. The method includes: acquiring an identifier of a wavelength channel which is used for sending flexible grid label information; classifying, according to the identifier, each subcarrier which is used for bearing the flexible grid label information; in the wavelength channel corresponding to the identifier, determining a frequency range of the wavelength channel according to information about the each subcarrier classified; and allocating spectrum resources for one or more other wavelength channels except for the wavelength channel according to the frequency range, wherein the wavelength channel and the one or more other wavelength channels are jointly used for sending the flexible grid label information.

In an example embodiment, determining the frequency range of the wavelength channel according to the information about the each subcarrier classified includes: when the frequencies of subcarriers in the wavelength channel corresponding to the identifier are discontinuous, determining the frequency range according to a central frequency of each subcarrier in the wavelength channel and a bandwidth of each subcarrier in the wavelength channel.

In an example embodiment, determining the frequency range of the wavelength channel according to the information about the each subcarrier classified includes: when frequencies of subcarriers in the wavelength channel corresponding to the identifier are continuous, determining the frequency range according to a central frequency of the wavelength channel and a bandwidth of the wavelength channel.

In an example embodiment, acquiring the identifier of the wavelength channel which is used for sending flexible grid label information includes: acquiring the identifier from a data frame which is used for sending the flexible grid label information, wherein the above-mentioned data frame carries the identifier.

In an example embodiment, the above-mentioned data frame also carries the following information: a nominal central frequency of the above-mentioned wavelength channel, a location identifier of the central frequency of each subcarrier in the spectrum, and the number of bandwidth granularity.

According to another embodiment of the present disclosure, provided is a spectrum resource allocation device based on a flexible grid label. The device includes: an acquisition component which is set to acquire an identifier of a wavelength channel which is used for sending flexible grid label information; a classification component which is set to classify, according to the identifier, each subcarrier which is used for bearing the flexible grid label information; a determination component which is set to, in the wavelength channel corresponding to the identifier, determine a frequency range of the wavelength channel according to information about the each subcarrier classified; and an allocation component which is set to allocate spectrum resources for one or more other wavelength channels except for the wavelength channel according to the frequency range, wherein the wavelength channel and the one or more other wavelength channels are jointly used for sending the flexible grid label information.

In an example embodiment, the determination component is set to, when the frequencies of subcarriers in the wavelength channel corresponding to the identifier are discontinuous, determine the frequency range according to a central frequency of each subcarrier in the wavelength channel and the bandwidth of each subcarrier in the wavelength channel.

In an example embodiment, the determination component is set to, when frequencies of subcarriers in the wavelength channel corresponding to the identifier are continuous, determine the frequency range according to a central frequency of the wavelength channel and a bandwidth of the wavelength channel.

In an example embodiment, the acquisition component is set to acquire the identifier from a data frame which is used for sending the flexible grid label information, wherein the data frame carries the identifier.

In an example embodiment, the acquisition component is also set to acquire the identifier when the data frame carries the following information: a nominal central frequency of the above-mentioned wavelength channel, a location identifier of the central frequency of each subcarrier in the spectrum, and the number of bandwidth granularity.

Through the embodiments of the present disclosure, by the technical means of classifying each subcarrier for bearing flexible grid label information according to the identifier of the wavelength channel, determining the frequency range of the wavelength channel according to the information about the each subcarrier classified, and further allocating spectrum resources for one or more other wavelength channels, it can solve the technical problems which cannot yet be effectively solved in the art, such as the problem that it is hard to determine the channel range caused by the continuity of flexible grid channel subcarriers, thereby implementing the sending of information about a flexible grid label.

### Description of the Drawings

Drawings, provided herein for further understanding of the present disclosure and forming a part of the specification, are used to explain the present disclosure together with embodiments of the present disclosure rather than to limit the present disclosure. In the drawings:
FIG. 1 shows a flowchart of a spectrum resource allocation method based on a flexible grid label according to Embodiment 1 of the present disclosure;
FIG. 2 shows a structure diagram of a spectrum resource allocation device based on a flexible grid label according to Embodiment 1 of the present disclosure;
FIG. 3 shows a schematic diagram of a format of a wavelength label data frame according to Embodiment 2 of the present disclosure;
FIG. 4 shows a flowchart of a wavelength label transfer method according to Embodiment 2 of the present disclosure;
FIG. 5 shows a schematic diagram of a structural composition of a wavelength label transfer device according to Embodiment 2 of the present disclosure;
FIG. 6 shows a schematic diagram of a structural composition of another wavelength label transfer device according to Embodiment 2 of the present disclosure; and
FIG. 7 shows a schematic diagram of fixed grid and flexible grid network spectra according to Embodiment 2 of the present disclosure.

### DESCRIPTION OF EMBODIMENTS

The present disclosure is described below in detail by reference to the accompanying drawings in conjunction with embodiments. It should be noted that the embodiments and the characteristics of the embodiments may be combined with each other if no conflict is caused.

### Embodiment 1

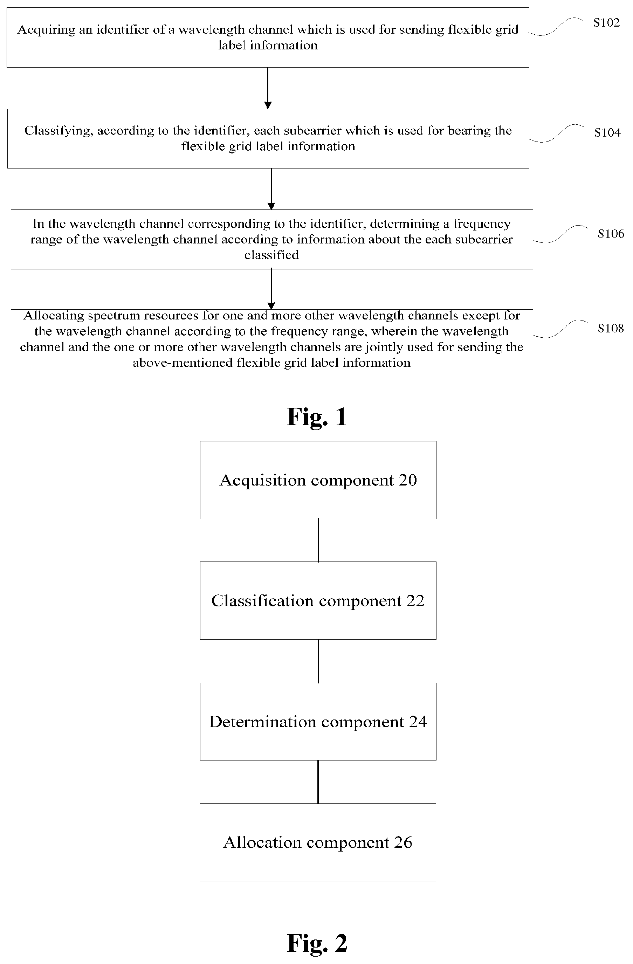

FIG. 1 shows a flowchart of a spectrum resource allocation method based on a flexible grid label according to Embodiment 1 of the present disclosure. As shown in Fig. 1, the method includes:
step S102, acquiring an identifier of a wavelength channel which is used for sending flexible grid label information;
step S104, classifying, according to the identifier, each subcarrier which is used for bearing the flexible grid label information;
in this embodiment, the above-mentioned identifier is used for showing the identifier of the channel where each subcarrier is located, e.g., channel number, etc.
step S106, in the wavelength channel corresponding to the identifier, determining a frequency range of the wavelength channel according to information about the each subcarrier classified; and
step S108, allocating spectrum resources for one and more other wavelength channels except for the wavelength channel according to the frequency range, wherein the wavelength channel and the one or more other wavelength channels are jointly used for sending the above-mentioned flexible grid label information.

Through the above-mentioned processing steps, by the technical means of classifying each subcarrier for bearing flexible grid label information according to the identifier of the wavelength channel, determining the frequency range of the wavelength channel according to the information about the each subcarrier classified, and further allocating spectrum resources for one or more other wavelength channels, it can completely avoid the problems such as the problem that it is hard to determine the channel range caused by the continuity of flexible grid channel subcarrier.

In the step S106, when determining the frequency range of the wavelength channel, there may be two cases:
The first case
   When frequencies of subcarriers in the wavelength channel corresponding to the above-mentioned identifier are discontinuous, determining the frequency range according to a central frequency of each subcarrier in the wavelength channel and a bandwidth of each subcarrier in the wavelength channel.
The second case
   When the frequencies of subcarriers in the wavelength channel corresponding to the identifier are continuous, determining the frequency range according to a central frequency of the wavelength channel and a bandwidth of the wavelength channel.

In this embodiment, the above-mentioned identifier may be acquired by many methods, e.g., local configuration, or acquired by the following method: acquiring the identifier from a data frame which is used for sending the flexible grid label information, wherein the data frame carries the above-mentioned identifier.

In this embodiment, the process for encapsulating the above-mentioned data frame includes: adding frame header and frame body for wavelength label information respectively, wherein the frame header includes frame alignment overhead, a frame ID, a frame length and an extension field, and the frame body includes a wavelength source address, a wavelength destination address, a channel number, whether the subcarriers are continuous or not, a central frequency of channel, a channel bandwidth, the number of subcarriers, central frequency of each subcarrier, a bandwidth of each subcarrier, an extension field, and a frame check bit; and encapsulating the wavelength label information added with the frame header and the frame body into a frame, wherein each wavelength label information frame carries information of one channel (wavelength channel), each channel may include one or more subcarriers, and the subcarriers may be discontinuous.

In this embodiment, the above-mentioned data frame also carries the following information: a nominal central frequency of the above-mentioned wavelength channel, a location identifier of the central frequency of each subcarrier in the spectrum, and the number of bandwidth granularity. During specific implementation, the application processes of the above-mentioned three kinds of information may be implemented in a manner as follows.

The determination of channel range is divided into two cases. In one case that the channel is continuous, the frequencies of subcarriers in the channel are continuous, and thus the range and location of channel are determined by the nominal central frequency of the channel and the bandwidth of the channel, wherein the calculation formula for the nominal central frequency of the channel is 193.1 THz + n x 0.00625 THz, where n is an integer (which may be a negative number), and the calculation formula for the bandwidth of the channel is 12.5 GHz x m, where m is a positive integer. In the other case that the channel is discontinuous, the range and location of channel are determined by the nominal central frequency of each subcarrier in the channel and the bandwidth of each subcarrier in the channel, wherein the calculation formulae of the nominal central frequency of each subcarrier and the bandwidth of each subcarrier are the same as the calculation formulae of the nominal central frequency of the channel and the bandwidth of the channel, except that values of n and m (both of n and m signify the number of the bandwidth granularity) may not be equal, and the channel range is the sum of the subcarrier ranges; the nominal central frequency of each subcarrier also determines the location of the channel.

In this embodiment, also provided is a spectrum resource allocation device based on a flexible grid label. The device is used to implement the above-mentioned embodiments and example embodiments, which has been described and will not be explained here. The components in the device are described below. As used below, the term "component" is a combination of software and/or hardware which are capable of implementing predetermined functions. Although the device described in the following embodiment may be preferably implemented by software, it would be conceived to implement hardware or a combination of software and hardware. FIG. 2 shows a structure diagram of a spectrum resource allocation device based on a flexible grid label according to Embodiment 1 of the present disclosure. As shown in Fig. 2, the device includes:
an acquisition component 20 which is coupled to a classification component 22 and set to acquire an identifier of a wavelength channel which is used for sending flexible grid label information;
the classification component 22 which is coupled to a determination component 24 and set to classify, according to the identifier, each subcarrier which is used for bearing the flexible grid label information;
the determination component 24 which is coupled to an allocation component 26 and set to, in the wavelength channel corresponding to the identifier, determine a frequency range of the wavelength channel according to information about the each subcarrier classified; and
the allocation component 26 which is set to allocate spectrum resources for one or more other wavelength channels except for the wavelength channel according to the frequency range, wherein the above-mentioned wavelength channel and the one or more other wavelength channels are jointly used for sending the flexible grid label information.

Through functions implemented by the above-mentioned components, it can also avoid problems such as the problem that it is hard to determine the channel range caused by the continuity of flexible grid channel subcarrier.

In this embodiment, the above-mentioned determination component 24 is set to, when frequencies of subcarriers in the wavelength channel corresponding to the identifier are discontinuous, determine the frequency range according to a central frequency of each subcarrier in the wavelength channel and the bandwidth of each subcarrier in the wavelength channel. In this embodiment, the above-mentioned determination component 24 is also set to, when the frequencies of subcarriers in the wavelength channel corresponding to the above-mentioned identifier are continuous, determine the frequency range according to a central frequency of the wavelength channel and bandwidth of the wavelength channel.

In this embodiment, the acquisition component 20 is set to acquire the identifier from a data frame which is used for sending the flexible grid label information, wherein the data frame carries the identifier. When the data frame carries the following information, the above-mentioned acquisition component 22 acquires the above-mentioned identifier: a nominal central frequency of the above-mentioned wavelength channel, a location identifier of the central frequency of each subcarrier in the spectrum, and the number of bandwidth granularity.

For better understanding of the above-mentioned embodiments detailed description is provided below in conjunction with embodiment 2 and the related accompanying drawings.

### Embodiment 2

This embodiment is described in two processes of sending and receiving flexible grid label information. This embodiment provides a solution for defining a flexible grid wavelength label, to effectively support the implementation of Flex Roadm in a wavelength division multiplexing system, support the carrying of flexible grid subcarrier information, support the carrying of channel information, solve the problem that flexible grid channel subcarriers are discontinuous, support monitoring and auto discovery for the wavelength path, and also find an error in wavelength label receiving timely.

### The sending side

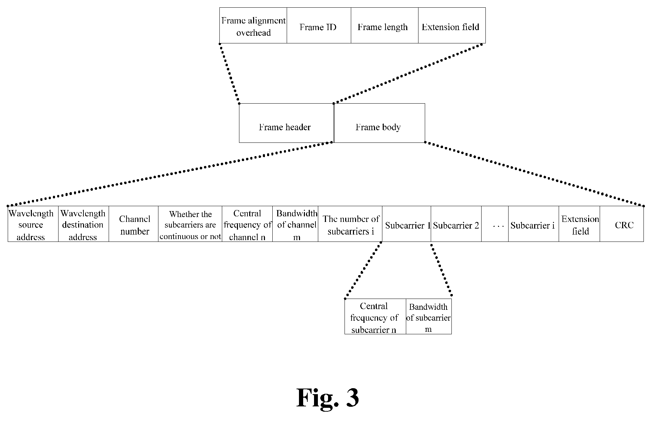

As shown in FIG. 3, a data frame structure is constituted by a frame header and a frame body, wherein the length of the frame header is fixed, and the length of the frame body is variable and is related to the actual number of subcarriers. In the case that the subcarriers are discontinuous, the central frequency of channel and the bandwidth of channel may be set to 0.

The frame header includes, but not limited to, frame alignment overhead, a frame ID, a frame length, and an extension field.

The frame alignment overhead is used to define the starting position of the frame, for example, it may be signified by a character sequence 0xF6F6F6282828 which is coincident with the frame alignment overhead of an Optical Transport Network (OTN) or by another special character sequence to ensure that the character sequence will not appear in the later coded frame data, so as to identify the starting of one wavelength label information frame through this special sequence.

The frame ID, as a serial number of the data frame, may be composed of serial numbers 1, 2, 3..., or serial numbers in other forms.

The frame length is used to signify the length of data frame body, and used for locating the length of data frame and delimiting the length of each field in the data frame, wherein this field is optional.

The extension field is reserved for later extension, and is optional if extension is not considered.

The frame body includes, but not limited to, a wavelength source address, a wavelength destination address, a channel number, whether the subcarriers are continuous or not, a central frequency of channel, a bandwidth of channel, the number of subcarriers in a channel, a central frequency of each subcarrier, a bandwidth of each subcarrier, an extension field, and Cyclic Redundancy Check (CRC), but is not limited to the fields.

The wavelength source address signifies the source node address of wavelength, may be constituted by an IP address, or a serial number such as 1, 2, 3..., or a Medium/Media Access Control (MAC) address, or other address modes as required.

The wavelength destination address signifies the address of the wavelength sending destination node, may be constituted by an IP address, or a serial number such as 1, 2, 3..., or a MAC (Medium/Media Access Control) address, or other address modes as required.

The channel number signifies the serial number of each channel, may be signified by 1, 2...i, or may be signified in other modes. Through the channel number, each subcarrier may be classified by the channel number, so as to solve the problem that frequency ranges of subcarriers are discontinuous.

Whether the subcarriers are continuous or not signifies whether the subcarriers in the current channel number are continuous or not, and may be signified continuity by 1 and discontinuity by 0. If the subcarriers are continuous, the channel range may be signified with the central frequency of channel and the bandwidth of channel; and if the subcarriers are discontinuous, the channel range may be signified only with the central frequency of each subcarrier in this channel and the bandwidth of each subcarrier in this channel.

The central frequency of channel and the bandwidth of channel are valid when the subcarriers are continuous, and signify the nominal central frequency of the current channel when the subcarriers are continuous, wherein the calculation formula of the nominal central frequency of the current channel is 193.1 THz + n x 0.00625 THz, where n is an integer (which may be a negative number); the channel bandwidth is 12.5 GHz x m, where m is a positive integer; and when the subcarriers are discontinuous, the values of the central frequency of channel and the bandwidth of channel may be 0.

The number of subcarriers is used to signify the number of subcarriers in this channel, and each channel may include information of one or more subcarriers, as shown in FIG. 1, the number i of subcarriers in the channel signifies that there are i subcarriers in the channel, including subcarrier 1, subcarrier 2...subcarrier i.

The central frequency of subcarrier signifies the nominal central frequency of the current subcarrier, wherein the calculation formula of the nominal central frequency of the current subcarrier is 193.1 THz + n x 0.00625 THz, where n is an integer; and the subcarrier bandwidth is 12.5 GHz x m, where m is a positive integer.

The extension field is used for extension of frame body, and is optional if extension is not considered.

Cyclic Redundancy Check (CRC) implements a simple cyclic redundancy check for the data frame, or other error detection/correction method may also adopted, e.g., Forward Error Correction (FEC), etc., and the field is optional if the check is not considered.

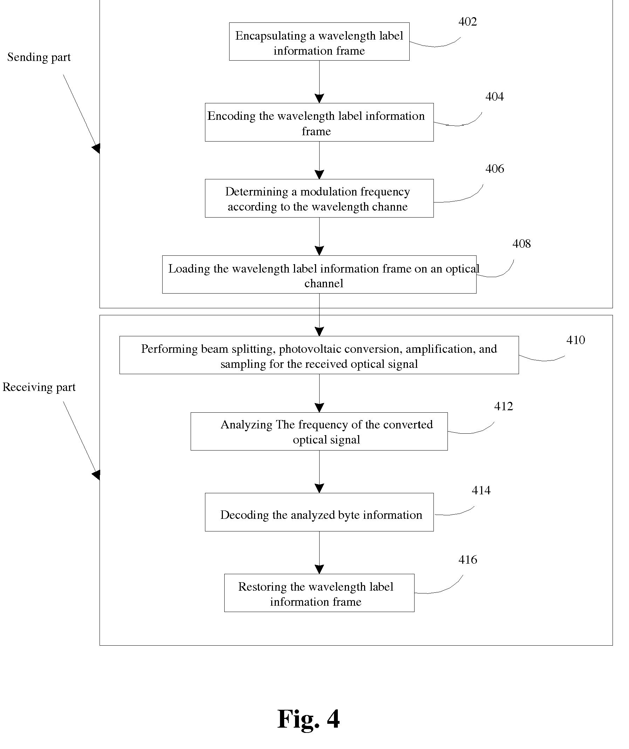

As shown in FIG. 4, in this embodiment, a method for wavelength label transport includes the following steps:
step S402, encapsulating a wavelength label information frame.

At the wavelength label sending terminal, framing is performed firstly, a frame header and a frame body of the data frame are generated according to the format in FIG. 3, and each field of the data frame is generated according to the corresponding rule.

First, the fields of frame header is generated in sequence, wherein the fields of frame header includes but not limited to frame alignment overhead, frame ID, frame length, and extension field.

In this embodiment, the frame alignment overhead is signified by a character sequence 0xF6F6F6282828 or by another special character sequence to ensure that the character sequence will not appear in the later coded frame data, so as to identify the starting of one wavelength label information frame through this special sequence.

In this embodiment, the frame ID uses serial numbers 1, 2, 3...i, or serial numbers in other forms.

The frame length is formed by reserving a byte length before the frame body is generated, and after the frame body is generated, the length of frame body is calculated and the length value is filled, wherein the length unit is signified by bytes.

The extension field is formed by reserving a byte length before use.

Then the wavelength source address, the wavelength destination address, the channel number, whether the subcarriers are continuous or not, the central frequency of channel, and the bandwidth of channel are generated.

The wavelength source address signifies the wavelength source node address, and is signified by serial numbers 1, 2, 3...i in this embodiment, or may be an IP address, an MAC address, etc.

The wavelength destination address signifies the wavelength destination node address, and is signified by serial numbers 1, 2, 3... in this embodiment, or may be an IP address, an MAC address, etc.

The channel number signified the serial number of channel, may be signified by 1, 2, 3..., may also be signified in other modes. Through the channel number, each subcarrier may be classified by the channel number, so as to solve the problem that frequency ranges of subcarriers are discontinuous.

Whether the subcarriers are continuous or not signifies whether the subcarriers in the current channel number are continuous or not, and in this embodiment, 1 signifies continuity; 0 signifies discontinuity; and other signifying methods may be used. If the subcarriers are continuous, the channel range may be signified with the central frequency of channel and the bandwidth of channel, and if the subcarriers are discontinuous, the channel range may be indicated only with the central frequency of each subcarrier in this channel and the bandwidth of each subcarrier in this channel.

The central frequency of channel and the bandwidth of channel are valid when the subcarriers are continuous, and signify the nominal central frequency of the current channel when the subcarriers are continuous, wherein the calculation formula is 193.1 THz + n x 0.00625 THz, where n is an integer (which may be a negative number);
the channel bandwidth is 12.5 GHz x m, where m is a positive integer; and when the subcarriers are discontinuous, the values of the central frequency of channel and the bandwidth of channel may be 0.

Then number of channel subcarrier, the central frequency of subcarrier, the bandwidth, the extension field, etc. are generated.

The number of subcarriers is used to signify the number of subcarriers in this channel, and each channel may include one or more subcarrier information.

The central frequency of subcarrier signifies the nominal central frequency of the current subcarrier, wherein the calculation formula is 193.1 THz + n x 0.00625 THz, where n is an integer; and
the subcarrier bandwidth is 12.5 GHz x m, where m is a positive integer.

The extension field is formed by reserving a byte length before use.

After the frame body is generated, the length of frame body is calculated, and the length is written into the frame length field of the frame header. This patent is not limited to this generating method.

Step S404, encoding the wavelength label information frame.

The bytes except for the frame header in the above-mentioned wavelength label information frame, i.e., the frame body portion, are encoded according to a coding rule. The data frame may be encoded by 4B/5B coding scheme, or by other coding schemes, such as 8B/10B and scrambling, no matter which coding scheme is used, the requirement that the coding scheme is decodable should be able to be satisfied.

Step S406, determining a modulation frequency according to the wavelength channel.

According to the wavelength channel corresponding to the above-mentioned wavelength label information frame, a low-frequency dither modulation frequency is determined corresponding to the wavelength channel; the frequency is generated by a digital frequency synthesizer, and the encoded wavelength label information frame signal is modulated to the low-frequency dither modulation frequency. The modulation mode may adopt amplitude modulation, or other modulation modes, such as frequency modulation.

Step S408, loading the wavelength label information frame on an optical channel.

A wavelength label loading device, such as an adjustable optical attenuator, is controlled with modulated low-frequency dither signal; the low-frequency dither signal is loaded to the corresponding wavelength channel with a suitable modulation depth (3%-8%, which may be set by experience or determined by emulation), and sends.

The above steps are the method for sending a wavelength label, and the above-mentioned method is adapted to sending terminals of various optical communication systems.

### The receiving side

The receiving process for a flexible grid wavelength label is described as follows.

Step S410, performing beam splitting, photovoltaic conversion, amplification, and sampling for the received optical signal.

At the wavelength label receiving terminal, the beam splitting is performed for the received optical signal by a coupler; a small fraction (e.g., 5%) of the optical signal is taken off and transferred to a PIN receiver for photovoltaic conversion, and then is amplified, sampled and performed analog-to-digital conversion.

Step S412, analyzing the frequency of the converted optical signal.

Analyzing the spectrum is performed for the sampled signal by a method such as Chirp Z-transformation (CZT) or Fast Fourier Transform (FFT); a frequency value of flow-frequency dither frequency and the carried byte information are obtained according to the result of spectral analysis, and the wavelength channel information is restored corresponding to the low-frequency dither frequency.

Step S414, decoding the analyzed byte information.

A special byte sequence is found corresponding to the frame header in the byte information after spectral analysis, e.g., 0xF6F6F6282828 herein, and then the frame data after the frame header are decoded. If the sending terminal uses 4B/5B coded data, decoding is preformed using 4B/5B decoding rule accordingly. If a code word is not in the 4B/5B coding table, an error is determined; the data frame is dropped; and a decoding error is reported. If no error occurs during decoding, framing is performed for the decoded data frame.

Step S416, restoring the wavelength label information frame.

Framing is performing for the decoded information, and then checking is performed. A frame check byte generated by CRC for the sending terminal is performed frame check by a CRC checking rule, and if the data in the frame passes the CRC, a frame header and a frame body is generated.

A frame header is generated first, and the information of the frame alignment overhead, the frame ID, the frame length, the extension field, etc. is extracted in sequence.

Then a frame body is generated, and effective information of the fields, such as the wavelength source address, the wavelength destination address, the channel number, whether the subcarriers are continuous or not, the central frequency of channel, the channel bandwidth, the number of subcarriers in a channel, the central frequency of each subcarrier, the bandwidth of each subcarrier, the extension field, and CRC field is extracted in sequence.

Address offset is adopted for extracting information according to the byte order, i.e., a frame field is formed accordingly when a field is extracted, until all fields are framed.

Otherwise, the CRC error is reported, and the wrong frame is dropped. If the sending terminal adopts FEC, the receiving terminal may also check by FEC.

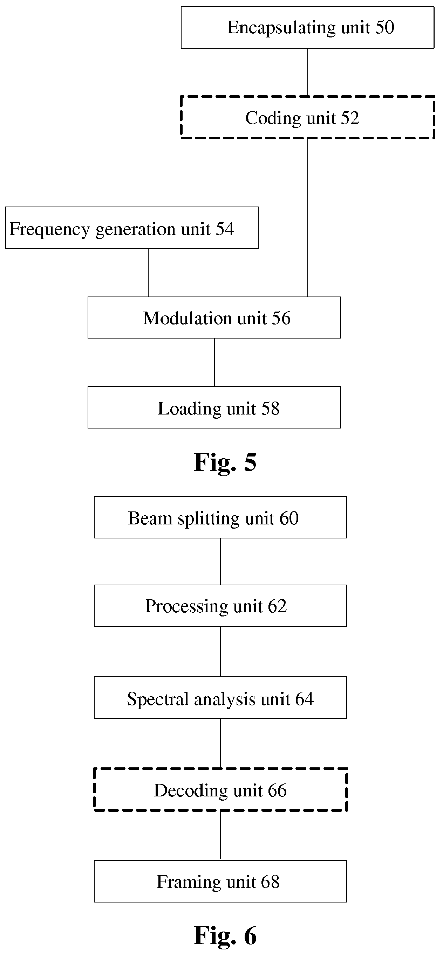

As shown in FIG. 5, in this embodiment, a wavelength label transfer device includes: an encapsulating unit 50, a coding unit 52, a frequency generation unit 54, a modulation unit 56 and a loading unit 58; wherein:
the encapsulating unit 50 is coupled to the coding unit 52, and is set to encapsulate the wavelength label information to form a wavelength label information frame; and
the encapsulating unit 52 adds a frame header for the to-be-sent wavelength label information and checks to form a wavelength label information frame. In this example embodiment, frame check adopts CRC, or adopts other error detection/correction methods, such as FEC. The wavelength label information frame data includes:
wavelength signal source address information which is necessary for tracing wavelength and discovering wavelength path;
carrying information such as the channel number, the number of subcarriers, the central frequency and the bandwidth of the subcarriers solves the problem that it is hard to determine the channel range caused by discontinuous subcarriers in a flexible grid optical transmission channel, and solves the problem in acquiring the sent central frequency and bandwidth of any subcarrier, and is also more convenient and accurate for locating the channel number and the each subcarrier in a flexible grid network.

Carrying the central frequency and bandwidth information of each subcarrier in each channel is more convenient for acquiring subcarrier information.

It may also add the corresponding extension information to the data of the wavelength label information frame according to requirements, such as sending and receiving time information, network link information, etc.

The coding unit 52 is coupled to the modulation unit 56, and is set to encode the wavelength label information.

The coding unit 52 encodes the frame content of the wavelength label information frame except for the frame header, adopting 4B/5B coding in this embodiment. The data frame may also be encoded by 4B/5B coding scheme, or by other coding schemes as required, such as 8B/10B and scrambling, no matter which coding scheme is used, the coding scheme is required to be decodable. In this example embodiment, the frame header adopts OTN frame location mode 0xF6F6F6282828. The sequence is an illegal code word in 4B5B coding, and thus will not appear in the coded frame data. This step is optional, for example, in the case that the wavelength channel has a better performance, this step is skipped, and wavelength unit label information frame is directly modulated to the corresponding low-frequency dither frequency by the modulation unit 304.

The frequency generation unit 54 is coupled to the modulation unit 56, and is set to generate a low-frequency dither frequency corresponding to the wavelength channel of the wavelength label information frame. First, the frequency generation unit 56 determines the corresponding low-frequency dither frequency according to the wavelength information of the wavelength signal, and then controls the digital frequency synthesizer to generate the low frequency.

The modulation unit 56 is set to modulate the wavelength label information frame to the low-frequency dither frequency, and modulate the coded or uncoded wavelength label information frame signal to the low-frequency dither frequency by amplitude modulation. Here, the modulation method may also be other modulation methods, such as frequency modulation.

The loading unit 58 is set to load the modulated wavelength label information frame signal to the wavelength channel and send it, load the modulated signal to the wavelength channel signal with a suitable modulation depth, and control the stability of modulation depth. Specifically, the loading unit 58 may be implemented by controlling a device, such as an adjustable optical attenuator, with a modulation signal.

In this embodiment, a low-frequency dither frequency bearing the wavelength label information frame should be set for each wavelength channel individually.

The above-mentioned device as shown in FIG. 5 is mainly used at a sending terminal of an optical network.

The implementation function of each processing unit in the wavelength label transfer device as shown in FIG. 5 may be understood with reference to the related description in the forgoing wavelength label transfer method. The function of each processing unit in the wavelength label transfer device as shown in FIG. 5 may be implemented by a program running on a processor, or may further be implemented by a corresponding logic circuit (e.g., a processor).

FIG. 6 shows a schematic diagram of a structural composition of another wavelength label transfer device according to an embodiment of the present disclosure. As shown in FIG. 6, this example embodiment wavelength label transfer device includes a beam splitting unit 60, a processing unit 62, a spectral analysis unit 64, a decoding unit 66 and a framing unit 68; wherein:
the beam splitting unit 60 is coupled to the processing unit 62, and is set to performing beam splitting for the received optical signal; the beam splitting unit 60 is formed by an optical fibre coupler, and may take out 5% of optical power for detection and receiving of wavelength label;
the processing unit 62 is coupled to the spectral analysis unit 64, and is set to perform photovoltaic conversion and analog-to-digital conversion for one path of optical signal (e.g., 5% of the whole optical signal); and
the processing unit 62 includes a PIN diode for implementing photovoltaic conversion, an amplifier, an analog-digital converter (ADC), etc. One path of optical signal is taken out, transferred to the PIN diode to perform photovoltaic conversion, then amplified (by the amplifier), and performed sampling and analog-to-digital conversion (specifically analog-to-digital conversion is performed by the analog-digital converter);
the spectral analysis unit 64 reads an ADC output signal in the processing unit 62, performs spectral analysis by chirp Z-transformation to obtain the frequency value of the low-frequency dither frequency existed in the signal and the frequency signal amplitude information, and restores the wavelength information corresponding to the frequency of the low-frequency dither frequency and the code stream information thereon; and
the decoding unit 66 is coupled to the framing unit 68, and is set to perform decoding in the byte information; is set to decode the byte information. When the decoding unit 66 decodes, the frame header is found in the code stream signal first, wherein the frame header is 0xF6F6F6282828 in this example embodiment, and then the frame data after the frame header are decoded by 4B/5B. During decoding, if a code word is not in a 4B/5B coding table, i.e., error code occurs, the frame data are dropped, and a decoding error is reported.

The decoding unit 66 in this example embodiment would not be an essential technical feature for implementing the technical solution, and thus in the case that the sending side does not perform encoding for the wavelength label information frame, it is not necessary to decode the demodulated byte information.

The framing unit 68 is set to perform framing for the byte information to obtain a wavelength label information frame, and acquire wavelength label information from the wavelength label information frame. When no error occurs during decoding, the framing unit 68 performs framing for the decoded data, forms the data after 4B/5B decoding into a frame, and performs CRC; and if an error occurs, the framing unit 68 reports a CRC error. If no error is found, a wavelength source address, a wavelength destination address, a channel number, whether the subcarriers are continuous or not, a central frequency of channel, a bandwidth of channel, the number of subcarriers in a channel, a central frequency of each subcarrier, a bandwidth of each subcarrier, the number of subcarriers, a frame length, an extension field, etc. in the frame data are extracted.

The wavelength source address is used for recognizing the source address of a wavelength signal or for other uses;
the wavelength destination address is used for recognizing the destination address of a wavelength signal or for other uses;
the channel number is used for recording serial numbers of each channel, and the corresponding subcarrier may be known through the channel number;
the number of subcarriers in a channel is used to indicate the number of subcarriers in this channel, and each channel may include one or more subcarrier information;
the field of whether the subcarriers are continuous or not is used to signify whether the subcarriers in the channel are continuous;
the values of nominal central frequency and bandwidth of the channel may be obtained from the central frequency of channel and the bandwidth of channel in the case that the subcarriers are continuous;
the number of subcarriers in this channel may be obtained from the number of subcarriers in a channel;
the central frequency of each subcarrier in each channel may be obtained from the central frequency of each subcarrier;
the bandwidth of each subcarrier in each channel may be obtained from the bandwidth of each subcarrier; and
finally, other information, such as wavelength information, address information, and flexible grid information, included in the wavelength label may be restored at the receiving terminal.

The wavelength label transfer device as shown in FIG. 6 is mainly used for a receiving terminal of an optical network.

The implementation function of each processing unit in the wavelength label transfer device as shown in FIG. 6 may be understood with reference to the related description in the forgoing wavelength label transfer method. The function of each processing unit in the wavelength label transfer device as shown in FIG. 6 may be implemented by a program running on a processor, or may further be implemented by a corresponding logic circuit.

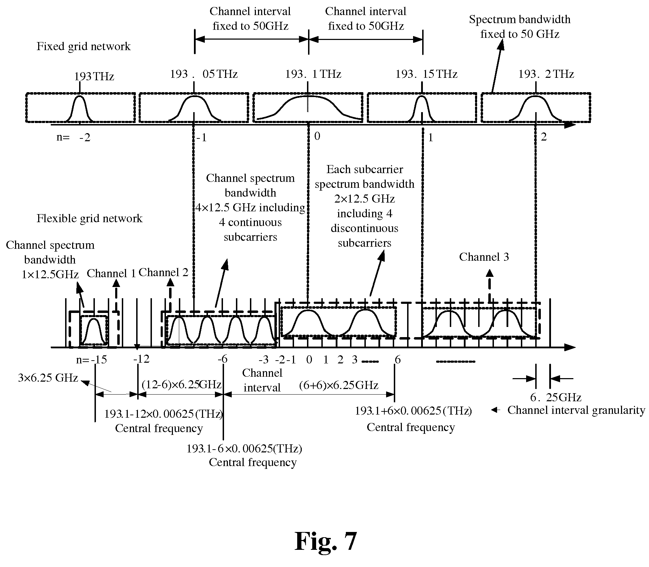

As shown in FIG. 7, in a fixed grid network, the interval between adjacent channels bearing services of wavelengths of different rates is fixed to 50 GHz, and at the same time, a fixed 50 GHz optical spectrum bandwidth resource is allocated for each wavelength. However, more spectrum bandwidth resources will be allocated for high-rate service for a flexible grid optical network according to the actual situation, and less but enough optical spectrum resources will be allocated for lower-rate service, so that the bandwidth utilization of network may be greatly improved. The spectral width of a channel may be 12.5 G, 25 G, 50 G, 100 GHz, etc., and the number of subcarriers in each channel may be discontinuous, for example, the channel 3 as shown in FIG. 7. Therefore, in a flexible grid network, for a channel with continuous subcarriers, the channel range may be signified by the central frequency and bandwidth of channel; and for a channel with discontinuous subcarriers, the channel carrier information cannot be determined by the central frequency of channel and the bandwidth of channel, and the method for determining the channel carrier information is: determining the carrier information by the central frequency of subcarrier and the bandwidth of subcarrier.

Through the above-mentioned embodiments, it may be seen that the embodiments of the present disclosure implement the following beneficial effects:
accomplishing the modulation of wavelength label signal by using less low-frequency dither modulation frequency, transferring information, such as the wavelength signal source address, a channel number where the subcarrier is located, a central frequency of channel, a bandwidth of channel, the number of subcarriers, and the central frequency and bandwidth of subcarrier, so as to solve the problem that it is hard to determine the channel range caused by discontinuous subcarriers in a flexible grid optical transmission channel.

In another embodiment, also provided is a kind of software for executing the technical solution described in the above-mentioned embodiments and example embodiments.

In another embodiment, also provided is a storage medium storing the above-mentioned software, the storage medium includes but not limited to: optical disk, floppy disk, hard disk, erasable memory, etc.

Obviously, a person skilled in the art would understand that the above components and steps of the present disclosure may be realized by using general purpose calculating device, may be integrated in one calculating device or distributed on a network which consists of a plurality of calculating devices, and alternatively they may be realized by using the executable program code of the calculating device, so that consequently they may be stored in the storing device and executed by the calculating device, in some cases, may perform the shown or described step in sequence other than herein, or they are made into integrated circuit component respectively, or a plurality of components or steps thereof are made into one integrated circuit component. Thus, the present disclosure is not limited to any particular combination of hardware and software.

The above description is only the example examples of the present document, which is not used to limit the present document. Any modification, equivalent replacement, or improvement made without departing from the principle of the present disclosure should fall within the protection scope of the present disclosure.

### Industrial Applicability

The above-mentioned technical solution provided by the present disclosure may be applied to a spectrum resource allocation process based on a flexible grid label. By the technical means of classifying each subcarrier for bearing flexible grid label information according to the identifier of the wavelength channel, determining the frequency range of the wavelength channel according to the information about the each subcarrier classified, and further allocating spectrum resources for one or more other wavelength channels, it may solve the technical problems which cannot yet be effectively solved in the art, such as the problem that it is hard to determine the channel range caused by the continuity of flexible grid channel subcarrier, thereby implementing the sending of information about a flexible grid label.

## Claims

1. A spectrum resource allocation method based on a flexible grid label, comprising:
acquiring an identifier of a wavelength channel which is used for sending flexible grid label information;
classifying, according to the identifier, each subcarrier which is used for bearing the flexible grid label information;
in the wavelength channel corresponding to the identifier, determining a frequency range of the wavelength channel according to information about the each subcarrier classified; and
allocating spectrum resources for one or more other wavelength channels except for the wavelength channel according to the frequency range, wherein the wavelength channel and the one or more other wavelength channels are jointly used for sending the flexible grid label information.

2. The method according to claim 1, wherein determining the frequency range of the wavelength channel according to the information about the each subcarrier classified comprises:
when frequencies of subcarriers in the wavelength channel corresponding to the identifier are discontinuous, determining the frequency range according to a central frequency of each subcarrier in the wavelength channel and a bandwidth of each subcarrier in the wavelength channel.

3. The method according to claim 1, wherein determining the frequency range of the wavelength channel according to the information about the each subcarrier classified comprises:
when frequencies of subcarriers in the wavelength channel corresponding to the identifier are continuous, determining the frequency range according to a central frequency of the wavelength channel and a bandwidth of the wavelength channel.

4. The method according to any one of claims 1 to 3, wherein acquiring the identifier of the wavelength channel which is used for sending flexible grid label information comprises:
acquiring the identifier from a data frame which is used for sending the flexible grid label information, wherein the data frame carries the identifier.

5. The method according to claim 2 or 3, wherein the data frame also carries the following information: a nominal central frequency of the wavelength channel, a location identifier of the central frequency of each subcarrier in the spectrum, and the number of bandwidth granularity.

6. A spectrum resource allocation device based on a flexible grid label, comprising:
an acquisition component which is set to acquire an identifier of a wavelength channel which is used for sending flexible grid label information;
a classification component which is set to classify, according to the identifier, each subcarrier which is used for bearing the flexible grid label information;
a determination component which is set to, in the wavelength channel corresponding to the identifier, determine a frequency range of the wavelength channel according to information about the each subcarrier classified; and
an allocation component which is set to allocate spectrum resources for one or more other wavelength channels except for the wavelength channel according to the frequency range, wherein the wavelength channel and the one or more other wavelength channels are jointly used for sending the flexible grid label information.

7. The device according to claim 6, wherein the determination component is set to, when frequencies of subcarriers in the wavelength channel corresponding to the identifier are discontinuous, determine the frequency range according to a central frequency of each subcarrier in the wavelength channel and bandwidth of each subcarrier in the wavelength channel.

8. The device according to claim 6, wherein the determination component is set to, when frequencies of subcarriers in the wavelength channel corresponding to the identifier are continuous, determine the frequency range according to a central frequency of the wavelength channel and a bandwidth of the wavelength channel.

9. The device according to any one of claims 6-8, wherein the acquisition component is set to acquire the identifier from a data frame which is used for sending the flexible grid label information, wherein the data frame carries the identifier.

10. The device according to claim 9, wherein the acquisition component is also set to acquire the identifier when the data frame carries the following information: a nominal central frequency of the wavelength channel, a location identifier of the central frequency of each subcarrier in the spectrum, and the number of bandwidth granularity.
